# EUROPEAN PATENT APPLICATION

(11) **EP 1 892 881 A1**
(43) Date of publication of application: **27.02.2008**
(21) Application number: 06775651.0
(22) Date of filing: 12.09.2006
(51) Int. Cl.: H04L 12/18

(54) **A METHOD FOR PROCESSING THE ABNORMAL MULTICAST SERVICE AND A NETWORK EQUIPMENT THEREOF**

(30) Priority: 25.11.2005 CN 200510123981
(71) Applicant: Huawei Technologies Co., Ltd., Longgang District Shenzhen Guangdong 518129 (CN)
(72) Inventor: LI, Jun, Guangdong 518129 (CN); WEI, Jiahong, Guangdong 518129 (CN)
(74) Representative: Körber, Martin Hans
(86) International application number: PCT/CN2006/002364
(87) International publication number: WO 2007/059679

(57) **Abstract**

The present invention provides a method and a network device for exception handling of multicast service, including: determining that the multicast bandwidth limitation of the port is exceeded or the number limitation of the multicast groups the port joins is exceeded, upon receiving a multicast join request from a port; finding out a multicast group which has no members on the port; stopping forwarding traffic of the multicast group to the port. In the present invention, problems, such as packet losing, failing to change channels, line bandwidth waste, home network bandwidth waste, due to the losing of an IGMP Leave message in applications such as the IPTV, may be solved.

## Description

### Field of the Technology

The present invention relates to the Internet Group Management Protocol (IGMP), and particularly, to a method for exception handling of a multicast service, and a network device capable of exception handling of a multicast service.

### Background of the Invention

The basic techniques of a multicast network include: the basic principle of multicast, conditions of implementing multicast, schemes of allocating multicast addresses, addresses mapping into a Media Access Control (MAC) layer, and the IGMP.

The basic principle of multicast is that multicast is a network technology allowing one or more transmitters, i.e., multicast source, to send a single data packet to multiple receivers simultaneously. The multicast source sends a data packet to a multicast group and only receivers as members of the multicast group can receive the data packet. In short, a host may join a multicast group through the IGMP and may leave the multicast group dynamically, i.e., the member relationship often varies. A router tracks the member relationship and tries to form a path without loop to members of the multicast group. A multicast routing protocol is used for discovering the optimized forwarding path of the multicast group. Once the multicast packet reaches a destination subnet, the multicast packet may be flooded or forwarded to a host.

Preconditions for implementing IP multicast include that: a multicast source, a receiver, and a network between the multicast source and the receiver all are required to support multicast, that is, the Transport Control Protocol / Internet Protocol (TCP /IP) of a host supports transmitting and receiving IP multicast; a network interface of the host supports the multicast; there is a group management protocol for joining, leaving and querying, i.e., the IGMP, including version 1 (v1), version 2 (v2) and version 3 (v3); there is an IP address allocation policy and a mechanism for mapping a Layer 3 multicast address into a Layer 2 multicast MAC address; there are applications supporting IP multicast; the routers and switches between the multicast source and the receiver are also required to support multicast.

The IGMP is used for communication between a host and a router and for changing or querying for the relationship between the host and a multicast group. The functions implemented by the IGMP mainly include joining a multicast group, leaving the multicast group and querying for a group member. The process for implementing the function of joining the multicast group includes: when joining the multicast group, a host notifies a multicast router of an IP subnet in which the host is located by means of a "membership report" message, and prepares an IP module of the host for receiving data transmitted from the multicast group. If the host is the first host of the IP subnet having joined the multicast group, the multicast router is added to a multicast forwarding tree by exchanging route information. After having joined the multicast group, a network interface card of the host of a receiver begins to snoop multicast MAC addresses related to group addresses of multicast. Multicast routers forward an IP multicast packet hop by hop from a multicast source to a network segment in which there is a receiver. The multicast router in a Local Area Network translates the group address of the IP multicast packet into an MAC address related to the group address. The receiver snoops the MAC address, and after receiving the packet from the multicast router, acquires the multicast IP packet from the received packet and transmits the multicast IP packet to the upper layer. The processes for implementing the function of leaving a multicast group in different versions of IGMP are different. In IGMP v1, a host quits the group silently when leaving a multicast group. The multicast router queries all the hosts of an IP subnet using a "membership query" with group address (224.0.0.1) periodically. The multicast router will not forward the packet of a multicast group into the IP subnet after determining that there is no member of this multicast group in the IP subnet. Meanwhile, the corresponding multicast route is deleted from a multicast forwarding tree by exchanging route information. Such a method of leaving silently without notification makes the multicast router have a delay in learning that there is no member in the IP subnet. In IGMP v2, each host needs to notify the multicast router in the subnet when leaving a multicast group. Thus, the latency of the system to stop the multicast is reduced. The group member query has a function of querying for which members are in the group, including a general query and a specific group query. The general query is to query for all the members in all groups no matter which group the members are in. The specific group query is to query for which members are in a specific group. IGMP v3 supports source specific multicast, that is, a member may join or leave a multicast group of a specific source.

The Internet Protocol-based TV (IPTV) service is an important application in a multicast network. In the IPTV service, typically, each channel is carried by one multicast group. When a user wants to watch a program on a certain channel, Customer Premises Equipment (CPE) of a user sends an IGMP Join message. After receiving the IGMP Join message, the network device adds the user into the corresponding multicast group and forwards packets of the multicast group to the user. If the user changes channels, the CPE sends an IGMP Leave message to leave the current channel and sends an IGMP Join message to join a new channel. After receiving the IGMP Leave message, the network device deletes the user from the current multicast group corresponding to the current channel and stops forwarding the packets of the current multicast group. After receiving the IGMP Join message, the network device enables the user to join a new multicast group corresponding to the new channel and forwards packets of the new multicast group to the user. The loss of the IGMP Leave message results in the fault of multicast in a network, and thus influences the normal operation of the network. Therefore, the loss of the IGMP Leave message needs to be handled. At present, there are mainly two methods for handling the loss of the IGMP Leave message as follows.

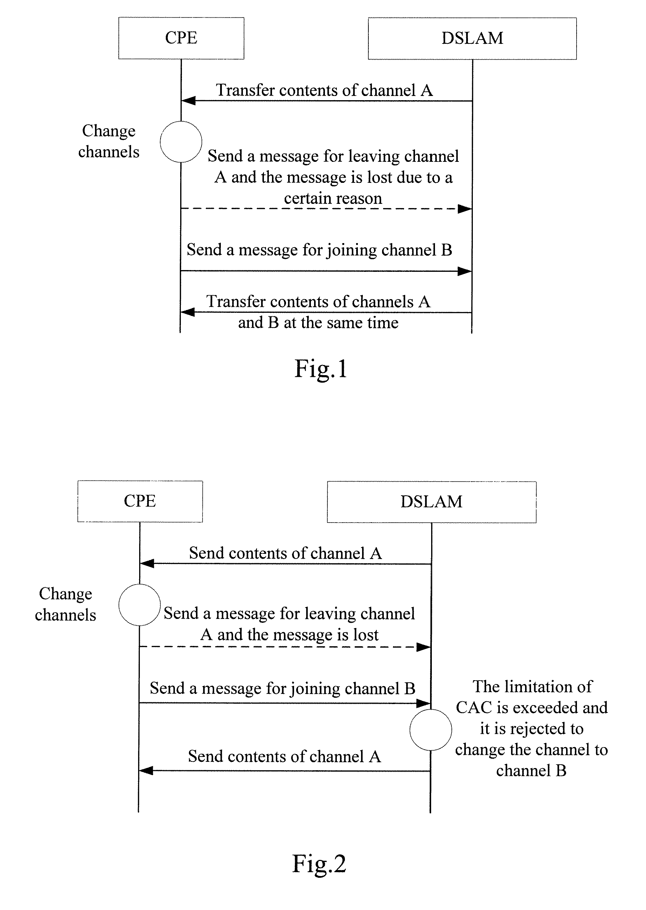

Method I: no handling is made for the loss of an IGMP Leave message. The access of a Digital Subscriber Line (DSL) based on a Digital Subscriber Line Access Multiplexer (DSLAM) is taken as an example. As shown in Fig.1, in the case that IGMP v2 is adopted, if a user changes channels, the CPE of the user sends an IGMP Leave message to leave the current channel corresponding to a current multicast group and sends an IGMP Join message to join a new channel corresponding to a new multicast group. In this process, if the IGMP Leave message is lost due to a reason, such as line interference, and thus the DSLAM does not receive the IGMP Leave message, the DSLAM forwards contents of the new channel and the current channel to a DSL port at the same time, which may bring serious problems as follows. 1) Traffic may exceed the line bandwidth of DSL, which results in a packet loss, and as a result, neither of programs on the two channels can be watched. 2) Excess bandwidth is wasted, that is, the bandwidth for other services is occupied, which may result in that a service, such as a data service, has no enough bandwidth. 3) The bandwidth of a home network is wasted excessively, which debases the performance of the home network and the performance of CPE in the home network. The disadvantage of Method I includes: the problem of multicast malfunction caused by the loss of an IGMP Leave message cannot be solved.

Method II is to improve Method I but only solves the above problem partially. The DSL is still taken as an example. As shown in Fig.2, Method II differs from Method I in that the function of Connection Admission Control (CAC) of multicast is added to a DSLAM. The function may limit the total bandwidth or the number of the multicast groups which a user port joins at the same time. Thus, when a user joins a new group due to the loss of the IGMP Leave message, the total bandwidth of the multicast groups which the user port may join exceeds the bandwidth specified by the CAC, or the number of the multicast groups may exceed the number specified by the CAC. In this case, the CAC rejects a new group join request so as to avoid that the bandwidth or the number of the multicast groups exceed the limitation. The disadvantage of Method II includes: although the problem caused by the loss of an IGMP Leave message may be solved with the method to certain extent, the user fails to change channels because the CAC only rejects the request of CPE for joining the new group. A possible result is that the CPE regards that the channel is changed to channel B but the network device still sends the multicast stream of channel A. Although this may solve the problem of bandwidth waste to some extent, a program on the channel cannot be watched normally and thus the experience of the user is bad.

### Summary of the Invention

The present invention provides a method for exception handling of a multicast service caused by the loss of IGMP Leave message or a similar message. The present invention also provides a network device capable of exception handling of a multicast service based on the method.

A method for exception handling of multicast service includes:
determining, by a network device, that there is a loss of an message carrying information of leaving a multicast group in a Customer Premises Equipment, CPE, or a user port; and
finding out the multicast group which the CPE has left or which has no member on the user port; and
stopping forwarding traffic of the multicast group to the CPE or the user port.

The message carrying the information of leaving the multicast group is a Leave message of Internet Group Management Protocol, IGMP, version 2 or a Report message of IGMP version 3.

The network device is selected from the group consisting of:
a Digital Subscriber Line Access Multiplexer, DSLAM, a Multiple Service Access Node, MSAN, an Ethernet switch, a router, an Optical Line Terminator, OLT of a Passive Optical Network, PON, a Base Station, BS, of Worldwide Interoperability Microwave Access, WIMAX, and a home network device supporting the handling of IGMP.

The finding out the multicast group which the CPE has left or which has no member on the user port includes:
sending, by the network device, an Internet Group Management Protocol, IGMP, query message to the CPE or the user port; and
determining the multicast group which the CPE has left or which has no members on the user port according to a response from the CPE.

The IGMP query message is a specific group query message for at least one multicast group or an IGMP general query message.

The method further includes:
recalculating, by the network device, the multicast join request of the CPE;
admit a multicast group newly requested by the user if the multicast bandwidth limitation is not exceeded or the number limitation of multicast groups is not exceeded; and
forwarding the traffic of the multicast group to the CPE or user port.

A network device capable of exception handling of multicast service includes:
an IGMP handling module capable of handling an Internet Group Management Protocol, IGMP; and
a multicast forwarding module, capable of forwarding traffic of the multicast group according to an result of handling the IGMP obtained by the IGMP handling module.
a multicast Connection Admission Control module capable of determining whether a new IGMP Join request is admitted by calculating a multicast bandwidth limitation or a number limitation of multicast groups, and instruct the IGMP handling module to handle the IGMP.

The network device is selected from the group consisting of:
a Digital Subscriber Line Access Multiplexer, DSLAM, a Multiple Service Access Node, MSAN, an Ethernet switch, a router, an Optical Line Terminator, OLT of a Passive Optical Network, PON, a Base Station, BS, of Worldwide Interoperability Microwave Access, WIMAX, or other network devices supporting the handling of IGMP.

The benefit effect of the present invention is that the serious problem due to the loss of an IGMP Leave message is solved with a newly defined multicast processing procedure based on the existing multicast CAC processing mechanism and a standard IGMP protocol, without modifying the multicast protocol stack of network device. With the method, the following problems caused by the loss of an IGMP Leave message in applications such as the IPTV may be solved, such as packet loss, failing to watch a program on a channel, failing to change channels, influencing other services due to line bandwidth waste, and home network bandwidth waste, thereby providing satisfied experiences with users.

Further, the present invention may be especially applied in handling the exception of multicast service due to the loss of an IGMP Leave message or other IGMP messages implementing the Leave function in an IPTV application. When receiving a new IGMP join request for joining a new multicast group, if the network device finds that the multicast bandwidth of a CPE or user port exceeds the limitation or the number of multicast groups which the CPE or user port may join exceeds the limitation, the network device sends an IGMP query message to find the multicast group which the CPE has left or which has no member on the user port, and deletes the CPE or user port from the multicast group. After stopping the forwarding of the abnormal multicast group through the above handling, the network device admits the user to join the new multicast group which the user makes a request for joining if there is no limitation of other conditions such as bandwidth or multicast group number.

### Brief Description of the Drawings

Fig.1 shows a schematic diagram illustrating the access process of a DSL in which no handling is made for the loss of an IGMP Leave message.
Fig.2 shows a schematic diagram illustrating the access process of a DSL in which a CAC function is added to a DSLAM.
Fig. 3 shows a schematic flow chart in accordance with an embodiment of the present invention.
Fig.4 shows a schematic diagram illustrating the structure of a network device of in accordance with anther embodiment of the present invention.

### Embodiments of the Invention

In accordance with embodiments of the present invention, when a network device determines that there is a loss of an IGMP Leave message or other IGMP messages with same function as the IGMP Leave message in a CPE or user port, the network device finds out the multicast group which the CPE has left or which has no member on the user port by an IGMP query, and deletes the CPE or user port or a logical port from the multicast group. Accordingly, the network device stops forwarding the abnormal multicast packet to the CPE or user port and thus makes the CPE or user port or the logical port back to a normal state.

In accordance with the embodiments of the present invention, the network device may be devices as follows: a DSLAM, a Multi service Access Node (MSAN), an Ethernet switch, a router, an Optical Line Termination (OLT) of Passive Optical Network (PON), a Base Station (BS) of Worldwide Interoperability for Microwave Access (WIMAX), and other network devices supporting the handling of IGMP.

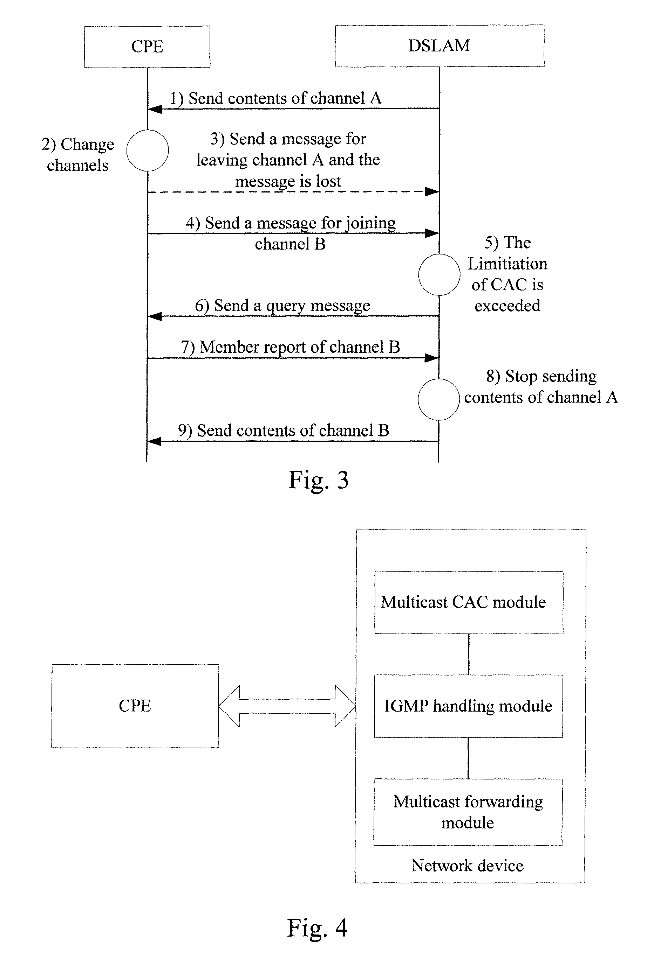

The flow in accordance with an embodiment of the present invention is hereinafter described by taking the process of handling the loss of an IGMP Leave message in a DSLAM as an example. The DSLAM supports a multicast CAC function which may limit the total bandwidth or the number of multicast groups which a user port may join at the same time. As shown in Fig.3, the implementation process of the present embodiment is described as following items.
1) A CPE receives traffic of the multicast group A sent from a DSLAM when a user is watching a program on channel A corresponding to multicast group A using the CPE.
2) The CPE switches channels from channel A to channel B when the user changes channels.
3) The CPE sends an IGMP Leave message to leave the multicast group A, but the DSLAM does not receive the IGMP Leave message for the loss of the IGMP Leave message due to certain reason.
   It is to be noted that the IGMP Leave message in 3) is not limited to the IGMP Leave message of IGMP v2, i.e., IGMP v2 Leave message. The message may also be an IGMP v3 Report message carrying information of leaving multicast group A. In this case, the IGMP v3 Report message may implement the same function as that of the IGMP v2 Leave message.
4) The CPE sends an IGMP Join message to join multicast group B.
5) The DSLAM receives the IGMP Join message, and finds out that the bandwidth of the user, that is, the total bandwidth of multicast group A and multicast group B and other possible multicast groups, exceeds the multicast bandwidth limitation, or that the number of the multicast groups which the user joins at the same time will exceed the number limitation if the user joins the multicast group B. Thus, the DSLAM will not admit the request for joining the multicast group B for the moment.
6) The DSLAM sends an IGMP query message to the CPE. The IGMP query message may be a specific group query message for the multicast group A and other possible existing multicast groups, as well as multicast group B. Besides, the IGMP query message may be a general query message.
7) After receiving the IGMP query message, the CPE responds with an IGMP Report message.
8) In accordance with the response of the CPE, the DSLAM finds that there is no member of the multicast group A on the user port, and thus deletes the user port from the multicast group A and stops forwarding traffic of the multicast group A to the CPE corresponding to the user.
9) The DSLAM recalculates the request of the user for joining the multicast group. If the multicast bandwidth limitation or the number limitation of multicast groups is not exceeded, the DSLAM will admit a multicast group newly requested by the user and forward traffic of the admitted multicast group to the user. For example, if the DSLAM has enough multicast bandwidth or multicast groups may be accessed, the DSLAM admits the request of the user for joining multicast group B and sends the traffic of the multicast group B to the user.

Thus, the procedure of a channel changing is performed. Although the IGMP Leave message is lost, the channel is still switched successfully without the waste of bandwidth. Moreover, the user does not perceive this procedure with an experience same as that in a normal channel changing procedure. Thus, the user is satisfied with the experience.

The system in accordance with an embodiment of the present invention is shown in Fig.4 and includes a network device and CPE.

As shown in Fig.4, the network device includes a multicast CAC module, an IGMP handling module and a multicast forwarding module. The IGMP handling module instructs the multicast CAC module to perform an admission control when receiving a Report message of a user for joining a new multicast group. The multicast CAC module calculates whether the bandwidth limitation or the bandwidth number of multicast groups is exceeded if the user joins the new multicast group, and instructs the IGMP handling module not to admit the request for the moment if the bandwidth limitation or the number bandwidth of multicast groups is exceeded. The IGMP handling module tries to find out the multicast group which the user does not need any longer through an IGMP query, and instructs the multicast forwarding module to modify the multicast forwarding table and stop forwarding the multicast stream of the multicast group to the user. Then, the CAC module is instructed again to calculate to determine whether the bandwidth limitation or the number bandwidth of multicast groups is exceeded if the user joins the new multicast group. If the CAC module finds that the bandwidth limitation or the number bandwidth of multicast groups is not exceeded, upon receiving the new Report message for joining the new multicast group, the CAC module instructs the IGMP handling module to admit the request. And the IGMP handling module instructs the multicast forwarding module to update the multicast forwarding table and forward the multicast stream of the new multicast group to the user. If the limitation is still exceeded, the CAC module instructs the IGMP handling module to reject the request.

Likewise, the network device in the embodiment of the present invention may be: a DSLAM, an MSAN, an Ethernet switch, a router, an OLT of PON, a BS of WIMAX, and other network devices supporting the handling of IGMP.

## Claims

1. A method for exception handling of multicast service, comprising:
determining, by a network device, that there is a loss of an message carrying information of leaving a multicast group in a Customer Premises Equipment, CPE, or a user port; and
finding out the multicast group which the CPE has left or which has no member on the user port; and
stopping forwarding traffic of the multicast group to the CPE or the user port.

2. The method of Claim 1, wherein the message carrying the information of leaving the multicast group is a Leave message of Internet Group Management Protocol, IGMP, version 2 or a Report message of IGMP version 3.

3. The method of Claim 1, wherein the network device is selected from the group consisting of:
a Digital Subscriber Line Access Multiplexer, DSLAM, a Multiple Service Access Node, MSAN, an Ethernet switch, a router, an Optical Line Terminator, OLT of a Passive Optical Network, PON, a Base Station, BS, of Worldwide Interoperability Microwave Access, WIMAX, and a home network device supporting the handling of IGMP.

4. The method of Claim 1, wherein the finding out the multicast group which the CPE has left or which has no member on the user port comprises:
sending, by the network device, an Internet Group Management Protocol, IGMP, query message to the CPE or the user port; and
determining the multicast group which the CPE has left or which has no members on the user port according to a response from the CPE.

5. The method of Claim 4, wherein the IGMP query message is a specific group query message for at least one multicast group or an IGMP general query message.

6. The method of Claim 1, further comprising:
recalculating, by the network device, the multicast join request of the CPE;
admit a multicast group newly requested by the user if the multicast bandwidth limitation is not exceeded or the number limitation of multicast groups is not exceeded; and
forwarding the traffic of the multicast group to the CPE or user port.

7. A network device capable of exception handling of multicast service, comprising:
an IGMP handling module capable of handling an Internet Group Management Protocol, IGMP; and
a multicast forwarding module, capable of forwarding traffic of the multicast group according to an result of handling the IGMP obtained by the IGMP handling module.
a multicast Connection Admission Control module capable of determining whether a new IGMP Join request is admitted by calculating a multicast bandwidth limitation or a number limitation of multicast groups, and instruct the IGMP handling module to handle the IGMP.

8. The network device of claim 7, wherein the network device is selected from the group consisting of:
a Digital Subscriber Line Access Multiplexer, DSLAM, a Multiple Service Access Node, MSAN, an Ethernet switch, a router, an Optical Line Terminator, OLT of a Passive Optical Network, PON, a Base Station, BS, of Worldwide Interoperability Microwave Access, WIMAX, or other network devices supporting the handling of IGMP.
